(19) **Europäisches Patentamt / European Patent Office / Office européen des brevets**

(11) **EP 3 083 524 B1**

(12) # FASCICULE DE BREVET EUROPEEN

(45) Date de publication et mention de la délivrance du brevet:
**31.01.2018 Bulletin 2018/05**

(21) Numéro de dépôt: **14824815.6**

(22) Date de dépôt: **17.12.2014**

(51) Int Cl.:
**C04B 38/00** (2006.01)

(86) Numéro de dépôt international:
**PCT/EP2014/078275**

(87) Numéro de publication internationale:
**WO 2015/091677 (25.06.2015 Gazette 2015/25)**

(54) **MATERIAUX MONOLITHIQUES INORGANIQUES ALVEOLAIRES ECHANGEURS CATIONIQUES, LEUR PROCEDE DE PREPARATION, ET PROCEDE DE SEPARATION LES METTANT EN OEUVRE**

ANORGANISCHE KATIONENAUSTAUSCHMATERIALIEN MIT ZELLULAREM MONOBLOCK, HERSTELLUNGSVERFAHREN DAFÜR UND TRENNVERFAHREN DAMIT

INORGANIC CELLULAR MONOBLOC CATION-EXCHANGE MATERIALS, THE PREPARATION METHOD THEREOF, AND SEPARATION METHOD USING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363329**

(43) Date de publication de la demande:
**26.10.2016 Bulletin 2016/43**

(73) Titulaire: **Commissariat à l'Énergie Atomique et aux Énergies Alternatives 75015 Paris (FR)**

(72) Inventeurs:
• **CAUSSE, Jérémy**
  **F-30131 Pujaut (FR)**

• **GRANDJEAN, Agnès**
  **F-30330 Saint-Marcel de Careiret (FR)**
• **TOKAREV, Alexei**
  **197371 Saint Petersbourg (RU)**
• **BARRE, Yves**
  **F-84100 Uchaud (FR)**

(74) Mandataire: **Brevalex 56, Boulevard de l'Embouchure B.P. 27519 31075 Toulouse Cedex 2 (FR)**

(56) Documents cités:
**EP-A1- 2 546 841       WO-A2-2008/129151 RU-A- 2008 125 922**

**Description**

**DOMAINE TECHNIQUE**

L'invention a trait à un matériau monolithique inorganique alvéolaire échangeur cationique.

Plus précisément, l'invention a trait à un matériau se présentant sous la forme d'un monolithe alvéolaire constitué par une matrice d'un oxyde inorganique à porosité hiérarchisée, ouverte et interconnectée, et des nanoparticules d'au moins un matériau solide inorganique échangeur d'un cation métallique tel qu'un hexa- ou octacyanométallate de métal étant répartis dans ladite porosité.

L'invention a également trait au procédé de préparation dudit matériau.

La présente invention concerne également un procédé de séparation des cations métalliques, notamment radioactifs, contenus dans un liquide mettant en oeuvre ledit matériau.

Le domaine technique de l'invention peut, de manière générale, être défini comme celui d'un traitement des effluents liquides et notamment comme celui du traitement des effluents liquides radioactifs, en vue notamment d'en éliminer les cations métalliques, tels que les cations césium.

**ÉTAT DE LA TECHNIQUE ANTÉRIEURE**

Les installations nucléaires telles que les réacteurs de puissance, les usines de retraitement du combustible nucléaire usé, les laboratoires, les centres de recherche, et les stations de traitement des effluents liquides, génèrent des effluents liquides radioactifs.

Ces effluents, dont les volumes sont considérables, doivent être traités et décontaminés avant leur rejet dans l'environnement.

Les polluants que contiennent ces effluents et qui doivent donc être éliminés sont principalement des particules solides et des radio-éléments essentiellement présents sous la forme de cations métalliques en solution.

Les procédés industriels de décontamination des effluents liquides, et notamment des effluents liquides radioactifs, sont cependant peu nombreux en raison de la composition complexe desdits effluents, de leur force ionique élevée, et également de la grande variété de valeurs de pH qu'ils peuvent présenter.

Les traitements actuellement les plus répandus dans le cadre de la décontamination des effluents liquides sont l'évaporation et le traitement chimique par coprécipitation.

Ainsi, la première étape d'un procédé de décontamination de solutions liquides, notamment de solutions liquides radioactives peu concentrées, à l'échelle industrielle, consiste généralement à réaliser l'évaporation de ces solutions afin de concentrer l'ensemble des ions présents dans celles-ci sous la forme d'un déchet solide, qui devient donc un résidu du procédé de décontamination.

Néanmoins, ce traitement d'évaporation n'est pas envisageable pour des effluents salins car il se produit alors un entartrage de l'installation.

De plus, la présence de certains ions dans les effluents liquides engendre une corrosion à chaud lors du traitement d'évaporation.

Dans le cas d'effluents radioactifs fortement salins, un autre traitement possible est le traitement chimique par coprécipitation ou entraînement qui est un traitement par changement de phase. Il s'agit de transférer les radio-éléments présents d'une phase liquide à une phase solide soit par une coprécipitation soit par entraînement à partir de particules solides.

Ces particules solides sont alors riches en radio-éléments et sont ensuite récupérées par filtration ou décantation avant d'être confinées dans une matrice adéquate.

Ces procédés de coprécipitation (par exemple par du sulfate de baryum pour l'extraction du $^{90}$Sr) ou d'entraînement (à partir de particules de nickel-hexacyanoferrate de potassium pour le $^{137}$Cs) présentent un certain nombre d'inconvénients.

Tout d'abord, les volumes de boues formés sont conséquents et peuvent poser des problèmes de compatibilité avec les matériaux utilisés actuellement pour confiner les déchets industriels, tels que les verres ou les matrices cimentaires. De plus, les agents de coprécipitation sont souvent sensibles à la composition chimique et à la force ionique de l'effluent, ce qui entraîne une chute importante de la sélectivité et donc une augmentation du volume de déchets.

Afin de surmonter les inconvénients énumérés plus haut des procédés de traitement, décontamination des effluents liquides, de nombreux chercheurs et industriels notamment dans l'industrie nucléaire recherchent actuellement d'autres voies pour le traitement de ces effluents.

Une des solutions étudiée est l'utilisation de matériaux inorganiques échangeurs ioniques, ou plus exactement de matériaux inorganiques échangeurs de cations qui présentent une grande sélectivité pour les ions à extraire. S'il existe une très vaste littérature sur les différents matériaux échangeurs ioniques inorganiques sélectifs du $^{90}$Sr, du $^{137}$Cs, ou du $^{60}$Co, la majorité des études concerne des essais réalisés en discontinu et mettant en oeuvre des matériaux échangeurs sous forme de poudres. En effet, les matériaux échangeurs ioniques inorganiques utilisés actuellement pour sorber les éléments à décontaminer se présentent essentiellement sous la forme de poudres relativement fines, présentant des tailles de grain de l'ordre du micromètre, qui ne sont pas compatibles avec un procédé mis en oeuvre en continu.

Ces poudres, lorsqu'elles sont utilisées dans un procédé mis en oeuvre en continu, notamment dans des colonnes, peuvent entraîner une forte perte de charge dans ces colonnes, qui peut aller jusqu'à leur colmatage, bouchage, et à l'arrêt de l'installation.

Si les matériaux échangeurs ioniques inorganiques sont utilisés non plus sous la forme de poudres lâches mais de poudres massives, compactes, les problèmes de colmatages sont certes alors évités, mais la taille micronique implique une capacité d'adsorption faible car l'adsorption a lieu en surface.

Il existe donc, au regard de ce qui précède, un besoin pour un matériau solide inorganique échangeur ionique, plus exactement pour un matériau inorganique échangeur de cations qui soit compatible avec une mise en oeuvre en continu dans un procédé de séparation d'un cation métallique à partir d'un milieu liquide, et qui possède une capacité d'adsorption élevée.

En particulier, ce matériau solide inorganique échangeur ionique doit être chimiquement et mécaniquement stable pour pouvoir être ainsi conditionné en colonne permettant une mise en oeuvre en continu sans que ne se produisent des phénomènes de bouchage, colmatage.

Ce matériau solide inorganique échangeur ionique doit également avoir d'excellentes propriétés de fixation, en particulier de décontamination, c'est-à-dire analogues, voire supérieures notamment à celles d'un matériau inorganique échangeur ionique sous la forme de poudres lâches.

Le matériau inorganique échangeur ionique doit aussi associer une bonne stabilité mécanique à une vitesse de réaction élevée à l'opposé des produits sous forme compacte dont la faible surface spécifique conduit à des vitesses de réaction lentes.

Autrement dit, ce matériau solide inorganique échangeur ionique doit présenter entre autres des stabilités mécaniques et chimiques excellentes, un fort coefficient d'affinité ou de décontamination, une grande réactivité, ainsi qu'une bonne sélectivité.

Ces propriétés doivent être obtenues avec une quantité minimale de matériau solide inorganique échangeur ionique.

De plus, en particulier dans le cas de la fixation d'éléments radioactifs, il faut que le matériau solide inorganique échangeur ionique puisse être aisément stocké et/ou vitrifié sans risque par les procédés connus.

Enfin, le matériau doit présenter une composition et des propriétés parfaitement reproductibles et contrôlées, et doit être préparé par un procédé fiable.

Le but de la présente invention est de fournir un matériau solide inorganique échangeur ionique qui réponde entre autres à ces besoins.

Le but de la présente invention est encore de fournir un matériau solide inorganique échangeur ionique qui ne présente pas les inconvénients, défauts, désavantages, et limitations des matériaux solide inorganique échangeur ionique de l'art antérieur notamment sous la forme de poudres lâches ou compactes, et qui surmonte les problèmes des matériaux de l'art antérieur.

## EXPOSÉ DE L'INVENTION

Ce but, et d'autres encore, sont atteints, conformément à l'invention par un matériau solide se présentant sous la forme d'un monolithe alvéolaire constitué par une matrice d'un oxyde inorganique à porosité hiérarchisée et ouverte comprenant des macropores, des mésopores, et des micropores, lesdits macropores, mésopores, et micropores étant interconnectés, et des nanoparticules d'au moins un matériau solide inorganique échangeur d'un cation métallique étant réparties dans ladite porosité.

Le matériau selon l'invention se distingue fondamentalement des matériaux de l'art antérieur en ce qu'il se présente sous la forme spécifique d'un monolithe alvéolaire, en ce que ce monolithe possède une porosité hiérarchisée associant trois types de pores, à savoir des macropores, des mésopores, et des micropores, et enfin en ce que des nanoparticules d'un matériau spécifique qui est un matériau solide inorganique échangeur d'un cation métallique sont réparties dans cette porosité.

Le matériau selon l'invention répond aux besoins énumérés plus haut, il ne présente pas les inconvénients des matériaux de l'art antérieur et il apporte une solution aux problèmes posés par les matériaux de l'art antérieur.

Ainsi, dans le cas d'un procédé de traitement d'effluents en colonne, le matériau selon l'invention qui se présente sous la forme spécifique d'un monolithe alvéolaire à porosité hiérarchisée, présente l'avantage de réduire fortement la perte de charge par rapport à un matériau constitué par un empilement compact de particules.

Le matériau selon l'invention permet de ce fait de limiter le risque de bouchage du système de traitement, tel qu'une colonne, dû à la production de fines particules au sein du lit de particules.

Le fait que le matériau selon l'invention soit sous la forme d'un monolithe lui confère une grande résistance et une grande stabilité mécaniques, tandis que le fait que le monolithe soit principalement constitué par un oxyde inorganique lui confère une grande résistance chimique et assure de ce fait le traitement d'une grande variété d'effluents.

En outre, la présence du matériau solide inorganique échangeur d'un cation métallique sous la forme de nanoparticules réparties dans la porosité du monolithe accroît fortement la quantité de cations métalliques qui peuvent être absorbés par rapport à un matériau solide inorganique échangeur de cations qui est sous une forme massive.

Ceci s'explique par le fait que lorsque l'échangeur de cations est sous forme nanométrique, la surface spécifique disponible pour les cations métalliques, tels que les cations césium, est plus élevée.

Des monolithes à porosité hiérarchique sont disponibles dans le commerce. Il s'agit uniquement de monolithes de silice.

L'incorporation de nanoparticules d'échangeurs de cations dans de tels monolithes n'a cependant été ni décrite ni suggérée, il en est de même de leur utilisation pour éliminer des cations d'un effluent liquide, en particulier pour décontaminer des effluents complexes contenant différents radio-éléments.

Il est en outre à noter que s'agissant des argiles et des zéolithes, les argiles et les zéolithes n'ont pas de porosité hiérarchisée. En effet, la taille des pores des zéolithes est monodisperse, en général de quelques angströms, correspondant à la taille de la cage cristalline ; et pour les argiles, qui sont des matériaux en feuillet, il y a également une seule taille de pores, de l'ordre du nm.

De nombreux documents font état de la fonctionnalisation de monolithes inorganiques par des fonctions chimiques liées de façon covalente au matériau. Il ne s'agit donc pas de l'incorporation de nanoparticules et encore moins de nanoparticules d'un échangeur de cations dans la porosité de monolithes.

Par exemple, le document WO-A1-2001/47855 [1] présente la fonctionnalisation d'un monolithe de silice par un silane dans le but de produire plus efficacement des molécules de type cétène. Dans ce cas, le silane est donc lié au réseau de silice par post-fonctionnalisation.

De même, le document WO-A2-2008/031108 [2] présente une liste de précurseurs de type silanes destinés à la fonctionnalisation de silices poreuses pré-synthétisées. Les applications visées sont diverses et dépendent du type de silane considéré.

Par ailleurs, on connaît un procédé de synthèse de monolithes qui a été mis au point par le groupe de R. BACKOV du Centre de Recherches Paul Pascal à Bordeaux.

Ce procédé consiste à préparer une émulsion directe huile dans l'eau contenant une majorité d'huile en volume. Un précurseur de silice préalablement dissout en phase aqueuse réagit pour former un réseau inorganique entourant les gouttes d'huile. La phase huile est ensuite éliminée par rinçage, ce qui libère la macroporosité du matériau. Afin de stabiliser l'interface eau/huile, des agents tensio-actifs sont nécessaires.

Ces agents tensio-actifs peuvent être soit des tensio-actifs organiques moléculaires, soit des particules colloïdales.

Le procédé mettant en oeuvre des tensio-actifs organiques moléculaires a fait l'objet de la demande WO-A2-2008129151 [3]. Il permet d'obtenir un matériau sous forme d'un monolithe solide alvéolaire constitué par un polymère d'un oxyde inorganique porteur de groupements organiques, qui présente une porosité hiérarchisée avec des macropores, des mésopores et des micropores interconnectés. Plus précisément, ce procédé consiste à préparer une émulsion en ajoutant une phase huileuse à une solution aqueuse de tensio-actif, à ajouter à la solution aqueuse de tensio-actif au moins un tétraalkoxyde précurseur du polymère d'oxyde inorganique, avant ou après la préparation de l'émulsion, on laisse le mélange réactionnel au repos jusqu'à la condensation du précurseur, puis on sèche le mélange pour obtenir un monolithe. Au moins un alkoxyde est porteur d'un groupe organique.

Il n'y a aucune mention ni aucune suggestion dans ce document de l'incorporation de nanoparticules, et encore moins de nanoparticules d'échangeurs de cations, dans de tels monolithes. De la même manière, l'utilisation de ces monolithes pour éliminer des cations d'un effluent liquide, en particulier pour éliminer des cations de radio-éléments d'effluents radioactifs, n'est ni décrite ni suggérée dans ce document.

Les demandes RU 2008125922 A et EP 2546841 A1 divulguent l'utilisation de nanoparticules organiques d'échangeurs d'ions pour la séparation du césium 137 ou respectivement des substances radioactives. Il n'y a aucune mention ni aucune suggestion dans ces demandes d'un matériau solide constitué par une matrice d'un oxyde inorganique à porosité hiérarchisée. Le procédé mettant en oeuvre des particules solides colloïdales a fait l'objet de la demande WO-A2-2012/049412 [4]. Il permet d'obtenir un matériau purement macroporeux, monodisperse et non un matériau à porosité hiérarchisée.

Plus précisément, ce procédé comprend au moins une étape de minéralisation d'une émulsion huile dans l'eau, formée de gouttelettes d'une phase huileuse dispersées dans une phase aqueuse continue, et dans laquelle des particules solides colloïdales sont présentes à l'interface formée entre la phase aqueuse continue et les gouttelettes de la phase huileuse.

Les particules solides colloïdales peuvent être minérales ou organiques.

Il n'y a aucune mention ni aucune suggestion dans ce document que les particules solides colloïdales puissent être des nanoparticules d'échangeurs de cations. De la même manière, l'utilisation des monolithes de ce document pour éliminer des cations d'un effluent liquide, en particulier pour éliminer des cations de radio-éléments d'effluents radioactifs n'est ni décrite ni suggérée.

Le rôle des particules colloïdales est, dans ce document, exclusivement de stabiliser l'émulsion, plus exactement l'interface eau-huile de l'émulsion, pour induire une macroporosité monodisperse du matériau.

En effet, la macroporosité du matériau, découle directement de la taille des gouttes de l'émulsion. La taille des gouttes de l'émulsion étant monodisperse, la macroporosité du matériau est en conséquence également très monodisperse.

Le rôle des particules dans ce document n'est en aucune manière de fonctionnaliser le monolithe afin de lui conférer des propriétés d'échange de cations, et notamment d'adsorbant sélectif de certains cations.

L'objectif visé par le matériau selon l'invention qui est de fonctionnaliser les monolithes avec ces nanoparticules, n'est ni mentionné, ni suggéré dans ce document ou le rôle des particules colloïdales est uniquement de stabiliser l'émulsion, et en aucune façon de rendre réactif le monolithe en vue de son utilisation pour l'élimination des cations d'une solution.

Selon l'invention, le seul et unique rôle des nanoparticules utilisées est de fonctionnaliser le monolithe, et non de stabiliser l'émulsion mise en oeuvre lors de la préparation du matériau, comme on le verra plus bas dans la description du procédé de préparation du matériau selon l'invention.

En effet, les nanoparticules d'échangeurs de cations, notamment de ferrocyanures utilisées seules ne permettent pas de stabiliser l'émulsion et de préparer le monolithe. C'est pourquoi dans le procédé selon l'invention, on a besoin d'un tensio-actif, en plus des nanoparticules, pour stabiliser l'émulsion.

Au sens de la présente invention, on entend par monolithe un objet solide dont la dimension moyenne est d'au moins 1 mm.

Au sens de la présente invention, on entend par macropores des pores dont la dimension moyenne, généralement définie par le diamètre de leur section transversale -car les pores ont généralement une section transversale circulaire-, de 4 $\mu$m à 50 $\mu$m ; on entend par mésopores, des pores dont la dimension moyenne est de 20 à 500 A, de préférence de 20 à 300 A; et on entend par micropores, des pores dont la dimension moyenne est inférieure à 20 A, par exemple est de 5 à 10 A.

Avantageusement, l'oxyde inorganique est choisi parmi les oxydes d'au moins un métal ou métalloïde choisi parmi Si, Ti, Zr, Th, Nb, Ta, V, W, Y, Ca, Mg et Al.

De préférence, l'oxyde inorganique est la silice.

Le matériau solide inorganique échangeur d'un cation métallique peut être choisi parmi tous les matériaux solides inorganiques échangeurs d'un cation métallique connus de l'homme du métier.

Ce matériau échangeur est choisi en fonction de l'application visée, de la nature de l'effluent liquide à traiter, et notamment en fonction du ou des cations métalliques que l'on souhaite séparer.

Avantageusement, le matériau solide inorganique échangeur d'un cation métallique est choisi parmi les hexa- et octacyanométallate de métal, par exemple de formule $[Alk^+_x]M^{n+}_y[M'(CN)_m]_t^{z-}$, où Alk est un cation monovalent choisi parmi les cations de métaux alcalins et le cation ammonium $NH_4^+$, x est 0, 1 ou 2, M est un métal de transition, n est 2 ou 3, y est 1, 2 ou 3, M' est un métal de transition, m est 6 ou 8, z est 3 ou 4, et t est 1, ou 2.

Avantageusement, $M^{n+}$ est $Fe^{2+}$, $Ni^{2+}$, $Fe^{3+}$, $Co^{2+}$, $Cu^{2+}$, ou $Z_n^{2+}$.

Avantageusement, M' est $Fe^{2+}$ ou $Fe^{3+}$ ou $Co^{3+}$ et m est 6 ; ou bien M' est $Mo^{5+}$ et m est 8.

Avantageusement, $[M'(CN)_m]^{z-}$ est $[Fe(CN)_6]^{3-}$, $[Fe(CN)_6]^{4-}$, $[Co(CN)_6]^{3-}$ ou $[Mo(CN)_8]^{3-}$.

De préférence, le matériau solide inorganique échangeur d'un cation métallique répond à la formule $[K^+_x]Cu^{2+}_y[Fe(CN)_6]^{z-}$, par exemple $K_2Cu\,Fe(CN)_6$.

En effet, une des applications principales visée pour les matériaux selon l'invention est celle de sorbants du césium radioactif pour des besoins de décontamination nucléaire.

Or les nanoparticules de ferrocyanures (et ferricyanures) de cuivre (FCCu) de formule générale $[K^+_x]Cu^{2+}_y[Fe(CN)_6]^{z-}$, par exemple $K_2Cu\,Fe(CN)_6$ sont très sélectives du césium. Leur structure cristalline est cubique face centrée, et présente l'avantage de pouvoir échanger sélectivement un atome de césium avec un atome de potassium non lié, présent dans la maille.

Généralement, les nanoparticules ont une forme de sphère ou de sphéroïde.

Généralement, les nanoparticules ont une taille moyenne, telle qu'un diamètre, de 2 à 300 nm, de préférence de 2 à 100 nm, de préférence encore de 2 à 50 nm.

Généralement, la teneur en nanoparticules du au moins un matériau solide inorganique échangeur d'un cation métallique est de 0,5 à 15 % en poids, de préférence 0,5 à 5% en poids.

L'invention concerne, en outre, un procédé de préparation du matériau selon l'invention qui comprend au moins les étapes suivantes :

a) on prépare une suspension aqueuse colloïdale de nanoparticules d'au moins un matériau solide inorganique échangeur d'un cation métallique ;

b) on prépare une solution aqueuse contenant un tensio-actif organique et un précurseur de l'oxyde inorganique ;

c) on mélange la suspension aqueuse colloïdale préparée dans l'étape a) avec la solution aqueuse préparée dans l'étape b) ;

d) on ajoute une phase huileuse, sous agitation mécanique avec cisaillement, à la solution aqueuse préparée dans l'étape c), moyennant quoi on obtient une émulsion huile dans l'eau formée de gouttelettes de la phase huileuse dispersée dans une phase aqueuse continue et dans laquelle les nanoparticules du au moins un matériau solide inorganique échangeur d'un cation métallique sont présentes à l'interface formée entre la phase aqueuse continue et les gouttelettes de la phase huileuse dispersée.

e) on réalise la maturation, minéralisation de l'émulsion obtenue dans l'étape d), moyennant quoi le monolithe se forme et on obtient le matériau selon l'invention.

Comme on l'a déjà exposé plus haut, selon l'invention le seul et unique rôle des nanoparticules utilisées est de fonctionnaliser le monolithe et non de stabiliser l'émulsion mise en oeuvre lors de la préparation du matériau, comme c'est le cas dans le procédé décrit dans le document [4]. En effet, les nanoparticules d'échangeurs de cations, notamment de ferrocyanures utilisées seules ne permettent pas de stabiliser l'émulsion et de préparer le monolithe. C'est pourquoi dans le procédé de préparation du matériau selon l'invention, on a besoin, au contraire du procédé décrit dans le document [4], d'un tensio-actif organique, moléculaire, en plus des nanoparticules, pour stabiliser l'émulsion.

Généralement, la suspension aqueuse colloïdale de nanoparticules préparée dans l'étape a), a une concentration en nanoparticules de 1 g/L à 50 g/L, de préférence de 9 g/L à 32 g/L, et son pH est généralement de 5 à 6.

La concentration en nanoparticules dans la suspension colloïdale aqueuse est choisie en fonction de la concentration finale en nanoparticules dans le matériau solide, monolithe.

Dans le cas où le matériau solide inorganique échangeur d'un cation métallique est un ferrocyanure de formule $[K^+_x]Cu^{z+}_y[Fe(CN)_6]^{z-}$, par exemple $K_2Cu\,Fe(CN)_6$, les solutions colloïdales de ces composés peuvent être préparées en mélangeant une solution aqueuse de $K_4Fe(CN)_6$ avec une solution aqueuse d'un sel de cuivre tel que le nitrate de cuivre. Cette technique de préparation est avantageuse car elle favorise la synthèse de nanoparticules de ferrocyanures peu monodisperses avec des tailles moyennes généralement comprises entre 10 nm et 20 nm. Cette technique de préparation, par mélange de deux solutions aqueuses, de la suspension aqueuse colloïdale du matériau solide inorganique échangeur d'un cation métallique, n'est pas limitée aux ferrocyanures de formule $[K^+_x]Cu^{z+}_y[Fe(CN)_6]^{z-}$, par exemple $K_2Cu\,Fe(CN)_6$, et peut s'appliquer à toutes sortes de matériaux échangeurs de cations et notamment aux hexa- et octacyanométallate de métal, par exemple de formule $[Alk^+_x]M^{n+}_y[M'(CN)_m]_t^{z-}$, telle qu'exposée plus haut.

La solution aqueuse contenant un tensio-actif organique et un précurseur de l'oxyde inorganique est généralement préparée en ajoutant le précurseur, généralement liquide, à une solution du tensio-actif organique.

La solution du tensio-actif organique peut avoir généralement une concentration de 10 à 30% en poids, par exemple de 20% en poids.

Cette solution peut avoir un pH voisin de 2, par exemple de 1,5 à 2,5, notamment de 1,8 à 2,2, lorsque le matériau solide inorganique échangeur d'un cation métallique est un hexa- ou octacyanométallate de métal, par exemple de formule $[Alk^+_x]M^{n+}_y[M'(CN)_m]_t^{z-}$ exposée plus haut, tel qu'un ferrocyanure de formule $[K^+_x]Cu^{2+}_y[Fe(CN)_6]^{z-}$ comme le $K_2Cu\,Fe(CN)_6$ .

Le pH peut être ajusté à la valeur souhaitée à l'aide d'un acide minéral ou organique, choisi de préférence parmi l'acide chlorhydrique, l'acide nitrique, ou l'acide sulfurique.

Le tensio-actif organique est choisi de préférence parmi les tensio-actifs cationiques et non ioniques, tels que les Pluronics comme le Pluronic P 123 commercialisé par les sociétés BASF ou SIGMA-ALDRICH.

L'oxyde inorganique est généralement choisi parmi les oxydes de métaux et de métalloïdes, et le précurseur de cet oxyde est généralement choisi parmi les alkoxydes de métaux ou de metalloïdes, et les sels de métaux ou de métalloïdes, tels que les chlorures et les nitrates de métaux et de métalloïdes.

Dans le cas où l'oxyde inorganique est la silice le ou les précurseurs de la silice peuvent être choisis parmi le tétraméthoxyorthosilane (TMOS), le tétraéthoxyorthosilane (TEOS), le dimethyldiéthoxysilane (DMDES), et leurs mélanges.

La concentration du tensio-actif dans la solution aqueuse préparée dans l'étape b) est généralement de 10% à 30% en poids, et la concentration du précurseur est généralement de 1 à 500 g/L.

Le pH de la solution aqueuse préparée dans l'étape b) peut être voisin de 2, par exemple de 1,5 à 2,5, notamment de 1,8 à 2,2.

Lors de l'étape c), on mélange un volume de la suspension (on peut éventuellement aussi l'appeler solution) aqueuse préparée dans l'étape a) (c'est-à-dire la suspension aqueuse colloïdale de nanoparticules d'au moins un matériau solide inorganique échangeur d'un cation métallique), avec un volume de la solution aqueuse préparée dans l'étape b) (c'est-à-dire la solution aqueuse contenant un tensio-actif organique et un précurseur de l'oxyde inorganique).

Ce mélange est réalisé suivant un rapport R en volume, défini par la relation suivante :

$$R = \text{Volume de la suspension aqueuse préparée dans l'étape a) / volume de la solution aqueuse préparée dans l'étape b).}$$

Le rapport R peut varier de 0 à 2, de préférence de 0,1 à 2, de préférence encore de 0 à 1, mieux de 0,1 à 1.

A l'issue de l'étape c), et avant l'étape d), lorsque le matériau solide inorganique échangeur d'un cation métallique est un hexa- ou octacyanométallate de métal, par exemple de formule $[Alk^+_x]M^{n+}_y[M'(CN)_m]_t^{z-}$ exposée plus haut, tel qu'un ferrocyanure de formule $[K^+_x]Cu^{2+}_y[Fe(CN)_6]^{z-}$, comme le $K_2Cu\,Fe(CN)_6$, le pH de la solution, obtenue dans l'étape c) est ajusté au voisinage de 2 (par exemple de 1,5 à 2,5, notamment de 1,8 à 2,2), et on réalise en outre une étape c1) au cours de laquelle on ajoute une solution aqueuse d'au moins un fluorure de métal, de préférence d'au moins un fluorure de métal alcalin tel que le KF, le LiF, ou le NaF à la solution obtenue dans l'étape c).

Le fluorure de sodium est généralement utilisé.

L'étape c1) est réalisée lorsque le matériau solide inorganique échangeur d'un cation métallique est un hexa- ou octacyanométallate de métal, par exemple de formule $[Alk^+_x]M^{n+}_y[M'(CN)_m]_t^{z-}$ exposée plus haut, tel qu'un ferrocyanure de formule $[K^+_x]Cu^{2+}_y[Fe(CN)_6]^{z-}$ comme le $K_2Cu\,Fe(CN)_6$.

En effet, dans les demandes [3] et [4] citées plus haut, le pH de préparation des matériaux, ou plutôt le pH des phases aqueuses mises en oeuvre, et notamment de la phase aqueuse de l'émulsion, est voisin de 0. Or à un tel pH, les nanoparticules d'hexa- ou octacyanométallate de métal, par exemple de formule $[Alk^+_x]M^{n+}_y[M'(CN)_m]_t^{z-}$ exposée plus haut, ne sont pas stables.

Il faut donc, lorsque l'on utilise de telles nanoparticules, se placer à un pH de la phase aqueuse de l'émulsion, c'est-à-dire de la solution préparée dans l'étape c) plus élevé, généralement voisin de 2 (par exemple de 1,5 à 2,5, notamment de 1,8 à 2,2), et dans ces conditions, l'ajout d'au moins un fluorure de métal, tel que NaF, est indispensable, sinon lors de l'étape d) l'émulsion reste liquide, la réaction sol-gel n'évolue jamais vers le solide, et l'on n'obtient pas de monolithe.

La solution d'au moins un fluorure de métal, tel que NaF, a généralement une concentration de 1 à 40 g/L., par exemple de 8 g/L.

La phase huileuse ajoutée lors de l'étape d) est généralement constituée par un ou plusieurs alcanes linéaires ou ramifiés ayant de 7 à 22 atomes de carbone tels que le dodécane et l'hexadécane.

L'agitation mécanique réalisée lors de l'étape d) est généralement réalisée en utilisant un appareil destiné à émulsionné appareil disperseur-homogénéiseur de type Ultraturrax®. L'étape d) peut être qualifiée d'étape d'émulsification du système constitué par la solution obtenue dans l'étape c) ou l'étape c1).

L'agitation mécanique est une agitation mécanique avec cisaillement.

La vitesse de cisaillement peut aller de 1 à 20000 trs/min, de préférence de 2000 à 15000 trs/min, de préférence encore la vitesse de cisaillement est de 3200 trs/min.

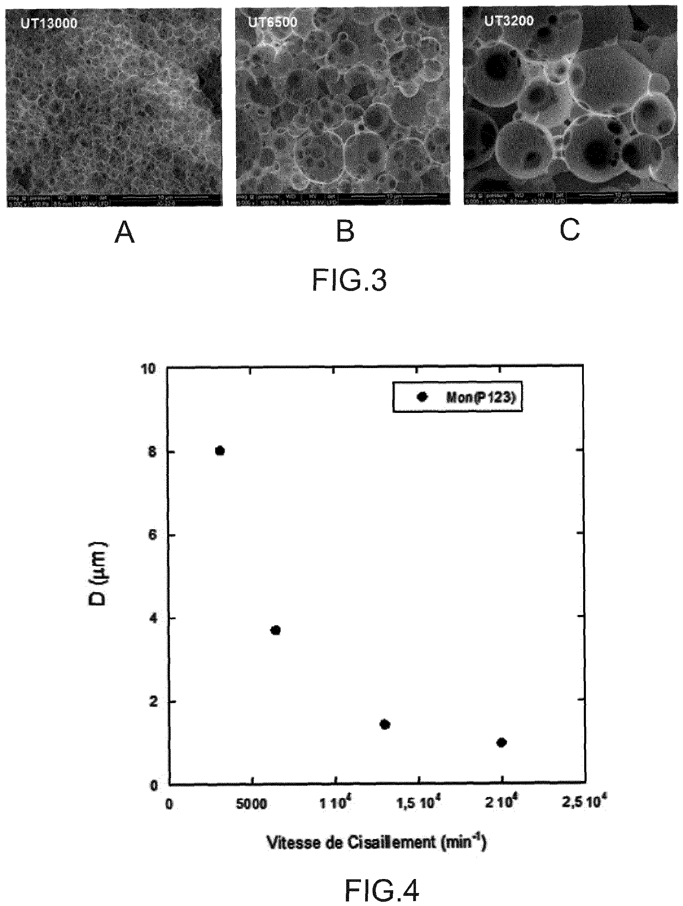

Comme on le montre dans l'exemple 2 (Figure 3), il est possible de contrôler la taille de la macroporosité des monolithes en agissant sur la vitesse de cisaillement de l'émulsion. La taille de la macroporosité diminue lorsque la vitesse de cisaillement augmente.

La fraction volumique de la phase huileuse de l'émulsion obtenue lors de l'étape d), est généralement de 50% à 74%, de préférence de 55% à 65% du volume de l'émulsion.

Lors de l'étape e), on réalise la maturation, minéralisation de l'émulsion obtenue dans l'étape d), moyennant quoi le monolithe se forme et on obtient le matériau selon l'invention.

Cette étape peut être réalisée en laissant l'émulsion obtenue dans l'étape d) au repos à une température de 10 à 60°C, par exemple à une température de 40°C pendant une durée suffisante pour que le monolithe à porosité hiérarchisée se forme. Cette durée peut être par exemple de 2 heures à 3 semaines, par exemple de 7 jours.

Généralement à l'issue de l'étape e), le matériau est lavé puis séché.

Le lavage permet d'éliminer les résidus organiques provenant de la phase huileuse et qui se trouvent essentiellement dans les macropores.

Ce lavage peut être réalisé avec un solvant organique tel que le THF, l'acétone et leurs mélanges.

Ce lavage peut être réalisé pendant une durée de 12 à 36 heures, par exemple de 24 heures.

De préférence, ce rinçage est réalisé en portant le solvant organique à reflux.

Le séchage peut être effectué en laissant s'évaporer le solvant organique utilisé pour le lavage à température ambiante pendant une durée généralement de 5 à 10 jours, par exemple de 7 jours.

Le séchage peut aussi être effectué en utilisant un fluide supercritique, tel que du $CO_2$ supercritique.

Le matériau selon l'invention, peut être mis en oeuvre notamment, mais non exclusivement, dans un procédé pour séparer au moins un cation métallique à partir d'un milieu liquide le contenant, dans lequel on met en contact ledit milieu liquide avec le matériau selon l'invention.

Les matériaux selon l'invention, du fait de leurs excellentes propriétés telles qu'une excellente capacité d'échange, une excellente sélectivité, une vitesse de réaction élevée, conviennent particulièrement à un tel usage.

Cette excellente efficacité est obtenue avec des quantités réduites de matériau solide inorganique échangeur d'un cation métallique tel qu'un hexacyanoferrate insoluble.

De plus, les excellentes propriétés de tenue et de stabilité mécaniques du matériau selon l'invention, résultant de sa structure spécifique permettent son conditionnement en colonne et la mise en oeuvre en continu du procédé de séparation, qui peut ainsi être facilement intégré dans une installation existante, par exemple dans une chaîne ou ligne de traitement comprenant plusieurs étapes.

Avantageusement, ledit milieu liquide peut être un milieu liquide aqueux, telle qu'une solution aqueuse.

Ledit milieu liquide peut être un liquide de procédé ou un effluent industriel.

Avantageusement, ledit milieu liquide peut être choisi parmi les liquides et effluents issus de l'industrie et des installations nucléaires et des activités mettant en oeuvre des radionucléides.

Généralement, ledit cation peut être présent à une concentration de 0,1 picogramme à 100 mg/L, de préférence de 0,1 picogramme à 10 mg/L.

Le terme « métal » recouvre aussi les isotopes et notamment les isotopes radioactifs dudit métal.

De préférence, le cation est un cation d'un élément choisi parmi Cs, Co, Ag, Ru, Fe et Tl et les isotopes, notamment radioactifs de ceux-ci.

De préférence encore, le cation est un cation du $^{134}$Cs, ou du $^{137}$Cs.

Ce procédé possède tous les avantages intrinsèquement liés au matériau selon l'invention, mis en oeuvre dans ce procédé, et qui ont déjà été décrits plus haut.

## BRÈVE DESCRIPTION DES DESSINS

- La Figure 1 est une photographie prise au microscope électronique à transmission (MET) des nanoparticules de ferrocyanures de cuivre qui se trouvent dans une solution colloïdale préparée comme dans l'étape 1 du protocole de préparation des monolithes contenant des nanoparticules.
  L'échelle portée sur la Figure 1 représente 20 nm.
- La Figure 2 est une photographie prise au microscope électronique à transmission (MET) des nanoparticules de ferrocyanure de cuivre qui se trouvent dans une solution colloïdale préparée comme dans l'étape 1 du protocole de préparation des monolithes contenant des nanoparticules.
  L'échelle portée sur la Figure 2 représente 50 nm.
- La Figure 3 (A, B, C) montre des photographies prises au microscope électronique à balayage (MEB) de monolithes de silice préparés à partir d'émulsions préparées en utilisant respectivement une vitesse de cisaillement de 13000 trs/min. (A), une vitesse de cisaillement de 6500 trs/min. (B), et une vitesse de cisaillement de 3200 trs/min (C).
  Les échelles portées sur la Figure 3 (A, B, C) représentent 10 $\mu$m.
- La Figure 4 est un graphique qui donne le diamètre moyen D des macropores des monolithes (en $\mu$m), en fonction de la vitesse de cisaillement (en min$^{-1}$) utilisée lors de la préparation de l'émulsion ayant servi à préparer ces monolithes.
- La Figure 5 est une photographie d'un monolithe de silice qui ne contient pas de nanoparticules (0% NP).
- La Figure 6 est une photographie d'un monolithe de silice contenant 2,50% en poids de nanoparticules (appelé 2,50@3200 ; 3200 étant la vitesse de cisaillement).
- La Figure 7 est un graphique qui donne les spectres de diffraction des rayons X (DRX) d'un bloc massif de particules de $K_{2,07}Cu_{1,08}Fe(CN)_6$ (CuHCF) (courbe A), et de monolithes contenant ces nanoparticules à différentes concentrations, à savoir les monolithes 2,86@3200 (courbe B) ; et 5,10@3200 (courbe C).
  En ordonnée est porté I (en unités arbitraires) et en abscisse est porté 20 (en °).
- La Figure 8 est un graphique qui donne la quantité totale de Cs adsorbée ($Q_{ADS}$) (en %) (en ordonnée à gauche, points ○ et □), et la quantité de Cs adsorbée normalisée (en ordonnée à droite, points ● et ■) qui est la quantité totale de Cs adsorbée divisée par la masse d'adsorbant ($Q_{ADS}/m_{ADS}$) (en mmol/g), en fonction de la fraction massique de nanoparticules dans les monolithes.

Les (○ et ●) concernent les monolithes préparés à partir d'une solution colloïdale dont la concentration en nanoparticules, [NP], dans la suspension colloïdale est de 9,0 g/L., et les (□ et ■) concernent les monolithes préparés à partir d'une solution colloïdale dont la concentration en nanoparticules, [NP], dans la suspension colloïdale est de 32,2 g/L.

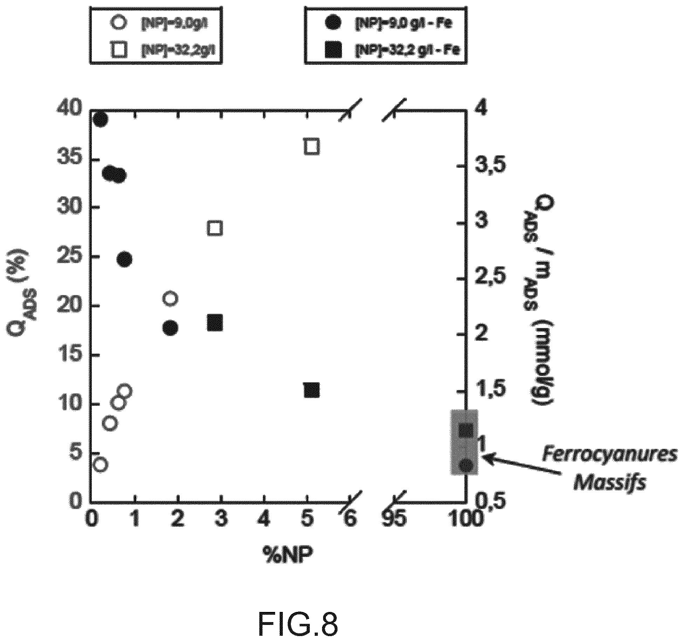

On a également porté sur la Figure 8 les résultats obtenus avec des ferrocyanures massifs (● et ■).

## EXPOSÉ DÉTAILLÉ DE MODES DE RÉALISATION PARTICULIERS

L'invention va maintenant être décrite en référence aux exemples suivants donnés à titre illustratif et non limitatif.

## EXEMPLES.

Dans les exemples suivants, on prépare des monolithes de silice contenant des nanoparticules de ferrocyanures et on utilise ces monolithes de silice contenant des ferrocyanures comme sorbants du césium ionique ($Cs^+$).

Exemple 1.

Dans cet exemple, on expose le protocole de préparation des monolithes de silice contenant des nanoparticules de ferrocyanures.

Le protocole de préparation des monolithes de silice contenant des nanoparticules de ferrocyanures comprend les étapes successives suivantes :

1. Préparation de suspensions aqueuses colloïdales de nanoparticules (NP) de $[K_x]Cu_yFe(CN)_6$.

Au cours de cette étape, on prépare des solutions, suspensions colloïdale de nanoparticules (NP) de $[K_x]Cu_yFe(CN)_6$ où x va de 0,5 à 2,5 et y va de 0,5 à 2.

La concentration en nanoparticules de ces solutions, suspensions peut aller jusqu'à 50 g/L de préférence jusqu'à 32 g/L.

Plus précisément, deux solutions, suspensions colloïdales ont été préparées en vue de leur utilisation dans les exemples qui suivent, à savoir une suspension à 9 g/L. de $[K_{1,77}]Cu_{1,16}Fe(CN)_6$ et une suspension à 32 g/L. de $[K_{2,07}]Cu_{1,08}Fe(CN)_6$.

Pour cela, on mélange rapidement une solution de $K_4Fe(CN)_6$ et une solution de $Cu(NO_3)_2$.

Les concentrations respectives en $K_4Fe(CN)_6$ et en $Cu(NO_3)_2$ dans chacune des solutions, sont de $5.10^{-3}M$ et $3,9.10^{-3}M$ pour obtenir une suspension à 9 g/L de $[K_{1,77}]Cu_{1,16}Fe(CN)_6$ et de $1,510^{-2}M$ et $1,1.10^{-2}M$ pour obtenir une suspension à 32 g/L. de $[K_{2,07}]Cu_{1,08}Fe(CN)_6$.

La stoechiométrie des ferrocyanures a été déterminée sur la base de résultats d'ICP *(« Inductively Coupled Plasma »* en anglais, spectrométrie à plasma à couplage inductif).

Les suspensions colloïdales de nanoparticules de ferrocyanure obtenues sont colorées en rouge et sont stables pendant des mois.

Ces suspensions sont ensuite utilisées comme précurseur du matériau final, c'est-à-dire du monolithe de silice contenant des nanoparticules de ferrocyanure.

La suspension utilisée dépend de la concentration finale en nanoparticules (NP) souhaitée dans le matériau final.

La taille des NP a été déterminée par microscopie électronique à transmission (MET).

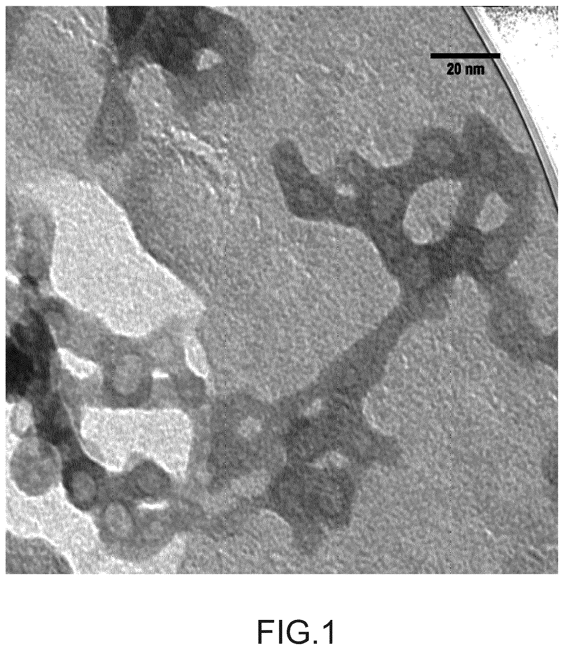

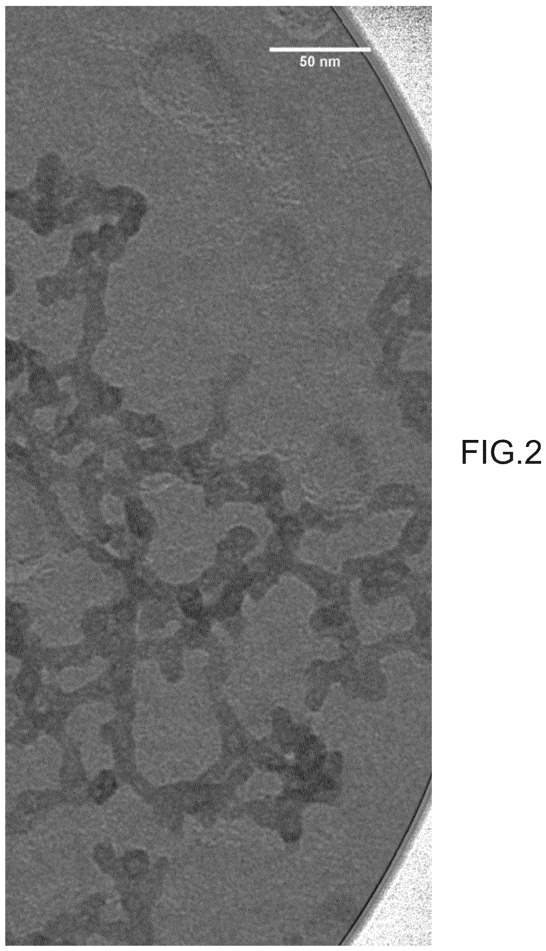

Les Figures 1 et 2 présentent des clichés pris en microscopie électronique à transmission (MET) de nanoparticules de ferrocyanure de cuivre préparées lors de cette étape : il s'agit de nanoparticules de $[K_{1,77}]Cu_{1,16}Fe(CN)_6$.

Cette technique de préparation favorise la synthèse de NP peu monodisperses avec des tailles moyennes comprises entre 10 et 20 nm.

La solution colloïdale préparée dans cette étape est appelée la solution A.

2. Préparation d'une solution aqueuse de tensio-actif.

Au cours de cette étape, on prépare une solution aqueuse à 20% en poids de Pluronic® P123 (tensio-actif commercialisé par BASF® ou Sigma-Aldrich®), à pH=2.

La solution de tensio-actif préparée dans cette étape est appelée solution B.

3. Préparation d'une solution d'un précurseur de silice contenant un tensio-actif.

Au cours de cette étape, on prélève un volume donné de solution B et on y ajoute lentement un volume donné de tétraéthylorthosilicate (TEOS).

On attend 30 minutes jusqu'à ce que la solution redevienne limpide.

On obtient ainsi la solution C.

4. Préparation d'une solution aqueuse contenant des nanoparticules de ferrocyanure, un précurseur de silice, et un tensio-actif.

Au cours de cette étape, on mélange un volume donné de solution A avec un volume donné de solution C.

Ce mélange est effectué selon un ratio, rapport volumique R défini par la relation suivante :

$$R = \text{V suspension colloïdale de nanoparticules / V solution P123 à 20\% en poids et}$$

$$\text{pH 2 (V solution A/ V solution C)}$$

Ce ratio, rapport R peut varier entre 0 et 2, de préférence entre 0 et 1. Ce mélange est appelé solution D.

5. Au cours de cette étape, on ajoute un volume donné d'une solution de fluorure de sodium (NaF) à 8 g/l dans la solution D.

On obtient ainsi la solution E.

6. Préparation d'une émulsion à partir de la solution E.

Rapidement, c'est-à-dire dans les 15 minutes suivant l'addition de la solution de fluorure de sodium ayant permis de préparer la solution E, on procède à l'émulsification de cette solution avec un volume donné de dodécane $(C_{12}H_{26})$.

Pour cela, on utilise un appareil disperseur-homogénéiseur de type Ultraturrax® et on ajoute lentement le dodécane dans la solution E sous cisaillement.

La vitesse de cisaillement peut varier de 0 à 20000 trs/min, et elle est de préférence de 3200 trs/min.

Les rapports volumiques de chaque constituant utilisé pour préparer l'émulsion sont les suivants :

V suspension colloïdale de nanoparticules (solution/suspension A) +V solution P123 à 20% en poids et pH 2(solution B) / V TEOS / V Solution de NaF à 8g/l / V dodécane = 1,94 /1/9,3.10$^{-3}$/4,75.

On obtient ainsi l'émulsion F.

7. Préparation du monolithe.

Au cours de cette étape dite étape de maturation, on prépare le monolithe contenant des nanoparticules de ferrocyanure.

Pour cela, on place la solution F à l'étuve à 40°C pendant 7 jours.

A l'issue de cette étape de maturation, le monolithe est formé.

Il ne reste plus que les étapes de lavage, rinçage/séchage à réaliser.

8. Lavage du monolithe.

Au cours de cette étape, on place le monolithe dans une cartouche d'un extracteur soxhlet, et on le rince pendant 24h avec du tetrahydrofuranne (THF) à reflux.

9. Séchage du monolithe.

Au cours de cette étape, on évapore lentement le THF à température ambiante pendant 7 jours. Cette étape de séchage peut également s'effectuer en utilisant du $CO_2$ supercritique.

A l'issue de l'étape de séchage, on obtient un monolithe chargé de nanoparticules prêt à l'emploi.

Exemple 2.

Dans cet exemple, on montre qu'il est possible de contrôler la taille de la macroporosité de monolithes de silice en agissant sur la vitesse de cisaillement de l'émulsion lors de l'étape 6 de préparation de l'émulsion qui précède l'étape 7 de préparation des monolithes.

Cette étude préliminaire a porté sur des émulsions et matériaux ne contenant pas de nanoparticules.

L'objectif était de montrer qu'il était possible de synthétiser des monolithes de silice dont la taille de la macroporosité est contrôlée, en agissant sur la vitesse de cisaillement de l'émulsion.

Pour cela, on prépare plusieurs émulsions à partir d'une même solution E, conformément à l'étape 6, en réalisant l'émulsification de cette solution avec un volume donné de dodécane ($C_{12}H_{26}$).

Les rapports volumiques de chaque constituant utilisé pour préparer l'émulsion sont les suivants : V solution P123 à 20% en poids et pH 2/VTEOS/$V_{NaF\_8g/l}$/Vdodécane=1,94/1/9,3.10$^{-3}$/4,75.

Pour préparer les émulsions, on utilise un appareil disperseur-homogénéiseur de type Ultraturrax® et on ajoute lentement le dodécane dans la solution E sous cisaillement.

Une première émulsion est préparée en utilisant une vitesse de cisaillement de 13000 trs/min., une deuxième émulsion est préparée en utilisant une vitesse de cisaillement de 6500 trs/min., et une troisième émulsion est préparée en utilisant une vitesse de cisaillement de 3200 trs/min.

On prépare ensuite un monolithe à partir de chacune des émulsions puis on le lave et on le sèche conformément aux étapes 7, 8, et 9.

On observe chacun des monolithes ainsi préparés au Microscope électronique à balayage (MEB).

La microscopie électronique à balayage permet de déterminer la taille statistique des macropores du monolithe, matériau final.

La Figure 3 (A, B, C) montre clairement l'effet de la vitesse de cisaillement de l'émulsion sur la taille de la macroporosité des monolithes préparés. La taille de la macroporosité diminue lorsque la vitesse de cisaillement augmente.

On peut donc tracer une sorte d'abaque permettant de prédire la taille des macropores du monolithe en fonction de la vitesse de cisaillement utilisée lors de la préparation de l'émulsion.

La Figure 4 représente ainsi le diamètre moyen des macropores du monolithe en fonction de la vitesse de cisaillement.

Exemple 3.

Dans cet exemple, on prépare des monolithes de silice contenant des nanoparticules (NP) de ferrocyanures $[K_x]Cu_yFe(CN)_6$ où x va de 0,5 à 2,5 et y va de 0,5 à 2.

Pour préparer ces monolithes, on utilise le protocole décrit plus haut, avec des concentrations en nanoparticules de la solution colloïdale A (étape 1 du protocole) de 9 g/L. ou de 32 g/L., divers rapports volumiques R (étape 4 du protocole) et une vitesse de cisaillement de 3200 trs/min lors de la préparation de l'émulsion (étape 6 du protocole).

Le tableau I ci-après, donne les concentrations en NP des solutions colloïdales, les valeurs des rapports volumiques R, les concentrations en NP (en poids) théoriques et mesurées des monolithes, pour les six monolithes contenant des nanoparticules préparés.

TABLEAU I

| Nom | 0,21@3200 | 0,43@3200 | 0,77@3200 | 1,83@3200 | 2,86@3200 | 5,1@3200 |
|---|---|---|---|---|---|---|
| Sol. Coll. R | 9g/l 0,07 | 9g/l 0,11 | 9g/l 0,24 | 9g/l 0,64 | 32 g/l 0,24 | 32 g/l 0,64 |
| % en pds NP théo. | 0,3 | 0,6 | 1,2 | 2,5 | 4,4 | 8,4 |
| % en pds NP ICP. | 0,21 | 0,43 | 0,77 | 1,83 | 2,86 | 5,1 |

Les concentrations en NP en poids ont été déterminées par des mesures d'ICP/AES après avoir dissous les monolithes.

On constate que ces valeurs de concentration en NP mesurées diffèrent des valeurs de concentration en NP théoriques. Ceci est dû à la perte d'une partie des NP lors des étapes de rinçage des monolithes.

Les monolithes préparés présentent tous une porosité hiérarchisée avec à la fois une microporosité, une mésoporosité et une macroporosité.

En conséquence, les monolithes ont également été caractérisés par des mesures d'adsorption-désorption d'azote pour déterminer leur surface spécifique BET ($S_{BET}$) ainsi que la taille des mésopores et des macropores.

Les résultats de ces mesures sont présentés dans le Tableau II ci-dessous.

TABLEAU II

| Nom | 0,21@3200 | 0,43@3200 | 0,77@3200 | 1,83@3200 | 2,86@3200 | 5,1@3200 |
|---|---|---|---|---|---|---|
| $S_{BET}$ (m$^2$/g) | 290 | 278 | 383 | 479 | 547 | 643 |

(suite)

| Nom | 0,21@3200 | 0,43@3200 | 0,77@3200 | 1,83@3200 | 2,86@3200 | 5,1@3200 |
|---|---|---|---|---|---|---|
| $D_{meso}$ (nm) | 2,6 | 2,7 | 2,7 | 2,7 | 3,1 | 6,2 |
| $D_{macro}$ ($\mu$m) | 4,2 | 4,1 | 4,3 | 8,6 | 5,7 | 5,1 |

On a également préparé un monolithe de silice sans nanoparticules (0% NP).

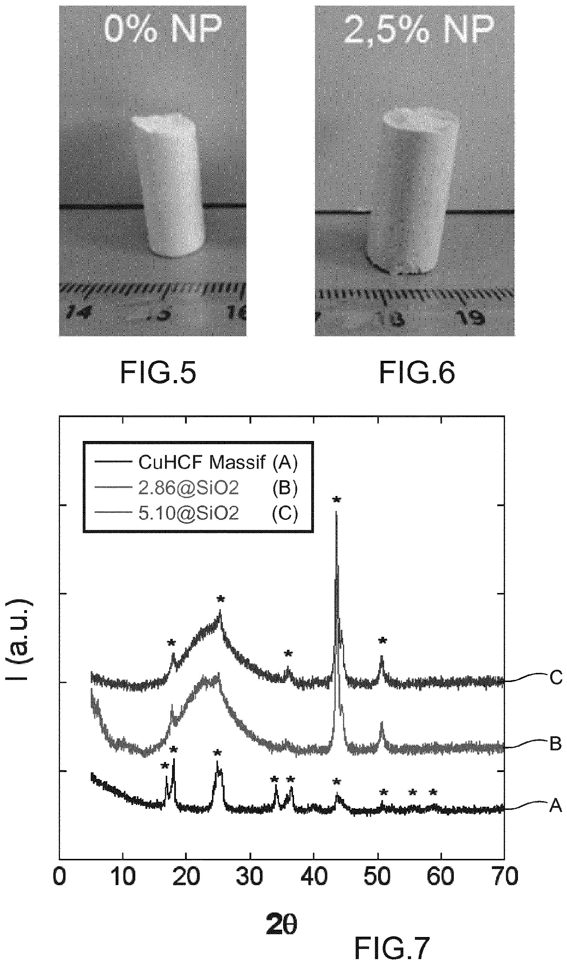

Des photographies de ce monolithe sans nanoparticules et du monolithe nommé 2,50@3200 sont présentées respectivement sur les Figures 5 et 6.

On effectue ensuite des analyses de diffraction des rayons X (DRX) d'un bloc massif de particules de $K_{2,07}Cu_{1,08}Fe(CN)_6$(CuHCF), et de monolithes contenant ces nanoparticules à différentes concentrations, à savoir les monolithes 2,86@3200 et 5,10@3200, les résultats de l'analyse DRX sont présentés sur la Figure 7.

L'analyse DRX permet de confirmer que la structure des NP est bien celle d'une structure tétragonale de $K_2CuFe(CN)_6$.

Les diffractogrammes relatifs aux monolithes montrent que les nanoparticules sont insérées dans le réseau de silice et que la structure est peu modifiée.

Exemple 4.

Dans cet exemple, on réalise des essais de sorption du $Cs^+$ sur les monolithes de silice contenant des nanoparticules de ferrocyanures préparés dans l'exemple 3 ou bien sur du ferrocyanure de cuivre massif.

Le but de ces essais est donc de comparer la capacité d'échange des monolithes chargés en NP avec celle du ferrocyanure de cuivre massif correspondant.

Dans ces essais, les ferrocyanures sont utilisés comme sorbants spécifiques du césium ionique ($Cs^+$). En effet, ils contiennent un ion potassium dans la maille cristalline qui s'échange spécifiquement avec un ion césium.

Les essais de sorption résumés ci-après sont réalisés selon un protocole normalisé.

Ce protocole comprend les étapes successives suivantes :

1. On prépare une solution contenant $1.10^{-3}$M de $CH_3COONa$ et $1.10^{-4}$M de $CsNO_3$. Cette solution est appelée solution G.
2. On prélève 10 mg de monolithe, ou bien 10 mg de ferrocyanure de cuivre massif, et on les immerge dans 20 mL de la solution G précédente.
3. On agite pendant 24h.
4. On prélève le surnageant, on filtre, et on mesure la teneur en Cs par chromatographie ionique.

Ce protocole permet de quantifier la capacité d'échange des monolithes tout en s'assurant de la sélectivité des matériaux pour le césium vis-à-vis du sodium.

Dans toutes les expériences dont les résultats sont regroupés, sur la Figure 8, la concentration en sodium était identique avant et après immersion du matériau dans la solution G.

Au bout de 24h d'agitation, l'équilibre d'adsorption est atteint, ce qui permet de comparer les expériences entre elles.

La figure 8 montre également l'intérêt d'utiliser des NP plutôt qu'un adsorbant massif. Si la quantité de Cs extraite est normalisée par la masse d'adsorbant présente dans le matériau, il apparaît que les matériaux les moins concentrés en NP sont les plus efficaces. Ceci s'explique par le fait que lorsque l'adsorbant est sous forme nanométrique, la surface spécifique disponible pour le césium est plus élevée. L'augmentation de la fraction massique en NP doit favoriser leur agrégation et le mécanisme d'adsorption dans le monolithe devient alors de plus en plus semblable à celui qu'on observe dans le cas des ferrocyanures de cuivre massifs. Le décalage observé pour les deux ferrocyanures massifs est dû aux proportions élémentaires en potassium différentes dans les deux cas.

Dans le cas du ferrocyanure massif issu de la solution colloïdale à 32,2 g/L., il y a en moyenne 2,07 atomes de potassium par mole alors que dans le cas de celui issu de la solution à 9,0 g/L., il n'y en a que 1,77. Le nombre d'atomes de potassium échangeable avec le césium est par conséquent différent, ce qui explique ce décalage.

Exemple 5.

Dans cet exemple, on réalise des essais de sorption du $^{137}Cs^+$ sur les monolithes de silice contenant des nanoparticules de ferrocyanures préparés dans l'exemple 3, ou bien sur du ferrocyanure de cuivre massif.

Dans le cas d'expériences menées sur du Cs radioactif, les concentrations sont beaucoup plus faibles que dans le cas de Cs non-radioactif. Le paramètre permettant d'estimer le niveau de décontamination d'une solution radioactive par un matériau sorbant est alors le coefficient de distribution $K_d$. Il est exprimé ainsi :

$$K_d = \frac{A_0 - A_{eq}}{A_{eq}} \frac{V}{m_{mat}}$$

Avec $K_d$ coefficient de distribution (ml/g) ; Ao, activité initiale de la solution à décontaminer; $A_{eq}$ activité à l'équilibre après 24 h de temps de contact ; V volume de solution à décontaminer utilisée (ml) ; et $m_{mat}$ masse de matériau sorbant utilisé (en g).

Pour évaluer la sélectivité des monolithes vis-à-vis d'autres cations compétiteurs du Cs, une solution radioactive complexe a été préparée avec la composition suivante :

$$A_0 = 41,2 \text{ kBq/L } ([Cs] \approx 10^{-10} \text{ mol/L})$$

$[Na^+] = 0,652$ mol/L
$[K^+] = 0,0015$ mol/L
$[Mg^+] = 0,002$ mol/L
$[NO_3^-] = 0,542$ mol/L
$[SO_4^{2-}] = 0,008$ mol/L
$[PO_4^{3-}] = 0,105$ mol/L

Les résultats sont consignés dans le tableau III suivant :

TABLEAU III

| Echantillon | 0,21@3200 | 1,83@3200 | 5,10@3200 | Massif 32g/L |
|---|---|---|---|---|
| $K_d$ (ml/g) | $2,410^3$ | $3,010^4$ | $1,110^5$ | $3,110^6$ |

Les résultats montrent que les monolithes capturent le $^{137}$Cs de manière très sélective vis-à-vis des autres cations compétiteurs. Les Kd sont très élevées quels que soient les concentrations en NPs des ferrocyanures immobilisés dans les monolithes.

L'efficacité des monolithes est ainsi validée sur des solutions radioactives représentatives des solutions que l'on doit traiter lors d'un cas accidentel réel, par exemple les effluents de la centrale de Fukushima Daiichi qui contiennent de l'eau de mer.

**Revendications**

1. Matériau solide se présentant sous la forme d'un monolithe alvéolaire constitué par une matrice d'un oxyde inorganique à porosité hiérarchisée et ouverte comprenant des macropores, des mésopores, et des micropores, lesdits macropores, mésopores, et micropores étant interconnectés, et des nanoparticules d'au moins un matériau solide inorganique échangeur d'un cation métallique étant répartis dans ladite porosité.

2. Matériau selon la revendication 1, dans lequel l'oxyde inorganique est choisi par les oxydes d'au moins un métal ou métalloïde choisi parmi Si, Ti, Zr, Th, Nb, Ta, V, W, Y, Ca, Mg et Al; de préférence l'oxyde inorganique est la silice.

3. Matériau selon l'une quelconque des revendications précédentes, dans lequel le matériau solide inorganique échangeur d'un cation métallique est choisi parmi les hexa-et octacyanométallate de métal, par exemple de formule $[Alk^+_x]M^{n+}_y[M'(CN)_m]_t^{z-}$ où Alk est un cation monovalent choisi parmi les cations de métaux alcalins et le cation ammonium $NH_4^+$, x est 0, 1 ou 2, M est un métal de transition, n est 2 ou 3, y est 1, 2 ou 3, M' est un métal de transition, m est 6 ou 8, z est 3 ou 4, et t est 1, ou 2 ; de préférence $M^{n+}$ est $Fe^{2+}$, $Ni^{2+}$, $Fe^{3+}$, $Co^{2+}$, $Cu^{2+}$, ou $Zn^{2+}$.

4. Matériau selon la revendication 3, dans lequel M' est $Fe^{Z+}$ ou $Fe^{3+}$ ou $Co^{3+}$ et m est 6 ; ou bien M' est $Mo^{5+}$ et m est 8.

5. Matériau selon l'une quelconque des revendications 3 à 4, dans lequel $[M'(CN)_m]^{z-}$ est $[Fe(CN)_6]^{3'}$, $[Fe(CN)_6]^{4-}$, $[Co(CN)_6]^{3-}$ ou $[Mo(CN)_8]^{3-}$.

6. Matériau selon la revendication 3, dans lequel le matériau solide inorganique échangeur d'un cation métallique répond à la formule $[K^+_{x]}Cu^{2+}_{y}[Fe(CN)_6]^{z-}$, par exemple $K_2Cu\,Fe(CN)_6$.

7. Matériau selon l'une quelconque des revendications 1 à 6, dans lequel les nanoparticules ont une forme de sphère ou de sphéroïde.

8. Matériau selon l'une quelconque des revendications précédentes, dans lequel les nanoparticules ont une taille moyenne, telle qu'un diamètre, de 2 à 300 nm, de préférence de 2 à 100 nm, de préférence encore de 2 à 50 nm.

9. Matériau selon l'une quelconque des revendications précédentes, dans lequel la teneur en nanoparticules du au moins un matériau solide inorganique échangeur d'un cation métallique est de 0,5 à 15% en poids, de préférence de 0,5 à 5% en poids.

10. Procédé de préparation du matériau selon l'une quelconque des revendications 1 à 9 qui comprend au moins les étapes suivantes :

   a) on prépare une suspension aqueuse colloïdale de nanoparticules d'au moins un matériau solide inorganique échangeur d'un cation métallique ;
   b) on prépare une solution aqueuse contenant un tensio-actif organique et un précurseur de l'oxyde inorganique ;
   c) on mélange la suspension aqueuse colloïdale préparée dans l'étape a) avec la solution aqueuse préparée dans l'étape b) ;
   d) on ajoute une phase huileuse, sous agitation mécanique avec cisaillement, à la solution aqueuse préparée dans l'étape c), moyennant quoi on obtient une émulsion huile dans l'eau formée de gouttelettes de la phase huileuse dispersée dans une phase aqueuse continue et dans laquelle les nanoparticules du au moins un matériau solide inorganique échangeur d'un cation métallique sont présentes à l'interface formée entre la phase aqueuse continue et les gouttelettes de la phase huileuse dispersée.
   e) on réalise la maturation, minéralisation de l'émulsion obtenue dans l'étape d), moyennant quoi le monolithe se forme et on obtient le matériau selon l'invention.

11. Procédé selon la revendication 10, dans lequel, à l'issue de l'étape c) et avant l'étape d), lorsque le matériau solide inorganique échangeur d'un cation métallique est un hexa- ou octacyanométallate de métal, par exemple de formule $[Alk^+_{x}]M^{n+}_{y}[M'(CN)_m]_t^{z-}$, où Alk est un cation monovalent choisi parmi les cations de métaux alcalins et le cation ammonium $NH_4^+$, x est 0, 1 ou 2, M est un métal de transition, n est 2 ou 3, y est 1, 2 ou 3, M' est un métal de transition, m est 6 ou 8, z est 3 ou 4, et t est 1, ou 2, tel qu'un ferrocyanure de formule $[K^+_{x}]Cu^{2+}_{y}[Fe(CN)_6]^{z-}$, comme le $K_2Cu\,Fe(CN)_6$, le pH de la solution obtenue dans l'étape c) est ajusté au voisinage de 2, et on réalise en outre une étape c1) au cours de laquelle on ajoute une solution aqueuse d'au moins un fluorure de métal tel que le KF, le LiF ou le fluorure de sodium NaF à la solution obtenue dans l'étape c).

12. Procédé pour séparer au moins un cation métallique à partir d'un milieu liquide le contenant, dans lequel on met en contact ledit milieu liquide avec le matériau selon l'une quelconque des revendications 1 à 9 ; de préférence ledit milieu liquide est un milieu liquide aqueux, tel qu'une solution aqueuse.

13. Procédé selon la revendication 12, dans lequel ledit milieu liquide est choisi parmi les liquides et effluents issus de l'industrie et des installations nucléaires et des activités mettant en oeuvre des radionucléides.

14. Procédé selon l'une quelconque des revendications 12 à 13, dans lequel ledit cation est présent à une concentration de 0,1 picogramme à 100 mg/L, de préférence de 0,1 picogramme à 10 mg/L.

15. Procédé selon l'une quelconque des revendications 12 à 14, dans lequel le cation est un cation d'un élément choisi parmi Cs, Co, Ag, Ru, Fe et Tl et les isotopes, notamment radioactifs de ceux-ci ; de préférence le cation est un cation du $^{134}$Cs, ou du $^{137}$Cs.

**Patentansprüche**

1. Feststoffmaterial in Form eines zellularen Monoblocks, gebildet durch eine Matrix eines anorganisches Oxids mit hierarchisierter und offener Porosität, die Makroporen, Mesoporen und Mikroporen - wobei die genannten Makroporen, Mesoporen und Mikroporen untereinander verbunden sind - und Nanopartikel wenigstens eines ein Metallkation austauschenden anorganischen Feststoffmaterials umfasst, die in der genannten Porosität verteilt sind.

2. Material nach Anspruch 1, bei dem das anorganische Oxid ausgewählt wird unter den Oxiden von wenigstens einem Metall oder Metalloid, das ausgewählt ist unter Si, Ti, Zr, Th, Nb, Ta, V, W, Y, Ca, Mg und Al ; vorzugsweise ist das anorganische Oxid das Siliciumdioxid.

3. Material nach einem der vorhergehenden Ansprüche, bei dem das Metallkation austauschende anorganische Feststoffmaterial ausgewählt wird unter den Metallhexa- und-octacyanometallaten, zum Beispiel der Formel $[Alk^+_x]M^{n+}_y[M'(CN)_m]_t^{z-}$, wo Alk ein einwertiges Kation ist, ausgewählt unter den Kationen der Alkalimetalle und dem Ammoniumkation $NH_4^+$, x gleich 0,1 oder 2 ist, M ein Übergangsmetall ist, n gleich 2 oder 3 ist, y gleich 1, 2 oder 3 ist, M' ein Übergangsmetall ist, m gleich 6 oder 8 ist, z gleich 3 oder 4 ist, und t gleich 1 oder 2 ist; $M^{n+}$ ist vorzugsweise $Fe^{2+}$, $Ni^{2+}$, $Fe^{3+}$, $Co^{2+}$, $Cu^{2+}$, oder $Zn^{2+}$.

4. Material nach Anspruch 3, bei dem M' $Fe^{2+}$ oder $Fe^{3+}$ oder $Co^{3+}$ ist und m 6 ist; oder M' $Mo^{5+}$ ist und m 8 ist.

5. Material nach einem der Ansprüche 3 bis 4, bei dem $[M'(CN)_m]^{z-}$ gleich $[Fe(CN)_6]^{3-}$, $[Fe(CN)_6]^{4-}$, $[Co(CN)_6]^{3-}$ oder $[Mo(CN)_8]^{3-}$ ist.

6. Material nach Anspruch 3, bei dem das ein Metallkation austauschende anorganische Feststoffmaterial der Formel $[K^+_x]Cu^{2+}_y[Fe(CN)_6]^{z-}$, zum Beispiel $K_2Cu\,Fe(CN)_6$, entspricht.

7. Material nach einem der Ansprüche 1 bis 6, bei dem die Nanopartikel eine sphärische oder sphäroidische Form haben.

8. Material nach einem der vorhergehenden Ansprüche, bei dem die Nanopartikel eine mittlere Größe haben, zum Beispiel 2 bis 300 nm, bevorzugt 2 bis 100 nm, noch bevorzugter 2 bis 50 nm.

9. Material nach einem der vorhergehenden Ansprüche, bei dem der Gehalt an Nanopartikeln wenigstens eines ein Metallkation austauschenden anorganischen Feststoffmaterials 0,5 bis 15 Gew.%, vorzugsweise 0,5 bis 5 Gew.% beträgt.

10. Verfahren zur Herstellung des Materials nach einem der Ansprüche 1 bis 9, das wenigstens die folgenden Schritte umfasst:

    a) man bereitet eine kolloidale wässrige Nanopartikel-Suspension aus mindestens einem Metallkation austauschenden anorganischen Feststoffmaterial vor;
    b) man bereitet eine einen oberflächenaktiven organischen Stoff und einen Vorläufer des anorganischen Oxids enthaltende wässrige Lösung vor;
    c) man mischt die in dem Schritt a) vorbereitete kolloidale wässrige Suspension mit der in dem Schritt b) vorbereiteten wässrigen Lösung ;
    d) man setzt der in Schritt c) vorbereiteten wässrigen Lösung unter mechanische Scherrührung eine Ölphase zu, wodurch man eine Öl-in-Wasser-Emulsion erhält, gebildet durch Tröpfchen der in einer kontinuierlichen wässrigen phase dispergierten Ölphase, und in der die Nanopartikel von wenigstens einem ein Metallkation austauschenden anorganischen Feststoffmaterial präsent sind an der Kontaktfläche zwischen der kontinuierlichen wässrigen phase und den Tröpfchen der dispergierten Ölphase.
    e) man realisiert die Reifung, Mineralisierung der in dem Schritt d) erhaltenen Emulsion, wodurch der Monoblock sich ausbildet und man das erfindungsgemäße Material erhält.

11. Verfahren nach Anspruch 10, bei dem, am Ende von Schritt c) und vor dem Schritt d), wenn das ein Metallkation austauschende anorganische Feststoffmaterial ein Metallhexa- undoctacyanometallat ist, zum Beispiel der Formel $[Alk^+_x]M^{n+}_y[M'(CN)_m]_t^{z-}$, wo Alk ein einwertiges Kation ist, ausgewählt unterden Kationen der Alkalimetalle und dem Ammoniumkation $Nh_4^+$, x gleich 0,1 oder 2 ist, M ein Übergangsmetall ist, n gleich 2 oder 3 ist, y gleich 1, 2 oder 3 ist, M' ein Übergangsmetall ist, m gleich 6 oder 8 ist, z gleich 3 oder 4 ist, und t gleich 1 oder 2 ist, wie zum Beispiel ein Ferrocyanid der Formel $[K^+_x]Cu^{2+}_y[Fe(CN)_6]^{z-}$, wie das $K_2Cu Fe(CN)_6$, der pH-Wert der in dem Schritt c) erhaltenen Lösung auf ungefähr 2 eingestellt wird, und man außerdem einen Schritt c1) realisiert, in dessen Verlauf man der in Schritt c) erhaltenen Lösung eine wässrige Lösung wenigstens eines Metallfluorids, zum Beispiel das KF, das LiF oder das Natriumfluorid NaF, zusetzt.

12. Verfahren zur Abtrennung wenigstens eines Metallkations von einem es enthaltenden flüssigen Medium, bei dem man das genannte flüssige Medium mit dem Material nach einem der Ansprüche 1 bis 9 in Kontakt bringt, wobei das flüssige Medium vorzugsweise ein wässriges flüssiges Medium wie zum Beispiel ein wässrige Lösung ist.

13. Verfahren nach Anspruch 12, bei dem das genannte flüssige Medium ausgewählt wird unter den Flüssigkeiten und Abwässern der Kernindustrie und der Nuklearanlagen, und der Aktivitäten die Radionukleide verwenden.

14. Verfahren nach einem der Ansprüche 12 bis 13, bei dem das genannte Kation präsent ist mit einer Konzentration von 0,1 Picogramm bis 100 Milligramm/L, vorzugsweise 0,1 Picogramm bis 10 Milligramm/L.

15. Verfahren nach einem der Ansprüche 12 bis 14, bei dem das Kation ein Kation eines Elements ist, das ausgewählt wird unter Cs, Co, Ag, Ru, Fe und TI und den Isotopen, insbesondere den radioaktiven Isotopen von diesen ; vorzugsweise ist das Kation ein Kation des $^{134}Cs$ oder des $^{137}Cs$.

**Claims**

1. A solid material in the form of an alveolar monolith consisting of a matrix of an inorganic oxide with a hierarchical and opened porosity comprising macropores, mesopores, and micropores, said macropores, mesopores, and micropores being interconnected, and nanoparticles of at least one metal cation exchange inorganic solid material being distributed in said porosity.

2. The material according to claim 1, wherein the inorganic oxide is selected from oxides of at least one metal or metalloid selected from Si, Ti, Zr, Th, Nb, Ta, V, W, Y, Ca, Mg and Al; preferably, the inorganic oxide is silica.

3. The material according to any one of the preceding claims, wherein the metal cation exchange inorganic solid material is selected from metal hexa- and octa-cyanometallate, for example of formula $[Alk^+_x]M^{n+}_y[M'(CN)_m]_t^{z-}$ wherein Alk is a monovalent cation selected from cations of alkali metals and the ammonium cation $NH_4^+$, x is 0, 1 or 2, M is a transition metal, n is 2 or 3, y is 1, 2 or 3, M' is a transition metal, m is 6 or 8, z is 3 or 4, and t is 1 or 2; preferably, $M^{n+}$ is $Fe^{2+}$, $Ni^{2+}$, $Fe^{3+}$, $Co^{2+}$, $Cu^{2+}$, or $Zn^{2+}$.

4. The material according to claim 3, wherein M' is $Fe^{2+}$ or $Fe^{3+}$ or $Co^{3+}$ and m is 6; or else M' is $Mo^{5+}$ and m is 8.

5. The material according to any one of claims 3 to 4, wherein $[M'(CN)_m]^{z-}$ is $[Fe(CN)_6]^{3-}$, $[Fe(CN)_6]^{4-}$, $[Co(CN)_6]^{3-}$ or $[Mo(CN)_8]^{3-}$.

6. The material according to claim 3, wherein the metal cation exchange inorganic solid material has the formula $[K^+_x]Cu^{2+}_y[Fe(CN)_6]^{z-}$, for example $K_2Cu Fe(CN)_6$.

7. The material according to any one of claims 1 to 6, wherein the nanoparticles have the shape of a sphere or of a spheroid.

8. The material according to any one of the preceding claims, wherein the nanoparticles have an average size, such as a diameter, from 2 to 300 nm, preferably from 2 to 100 nm, still preferably from 2 to 50 nm.

9. The material according to any one of the preceding claims, wherein the nanoparticles content of said at least one metal cation exchange inorganic solid material is from 0.5 to 15% by weight, preferably from 0.5 to 5% by weight.

10. A method for preparing the material according to any one of claims 1 to 9 which comprises at least the following steps:

    a) a colloidal aqueous suspension of nanoparticles of a metal cation exchange inorganic solid material is prepared;
    b) an aqueous solution containing an organic surfactant and a precursor of the inorganic oxide is prepared;

c) the colloidal aqueous suspension prepared in step a) is mixed with the aqueous solution prepared in step b);

d) an oily phase is added with mechanical stirring under shearing to the aqueous solution prepared in step c), whereby an oil-in-water emulsion is obtained formed with droplets of the oily phase dispersed in a continuous aqueous phase and wherein the nanoparticles of said at least one metal cation exchange inorganic solid material are present at the interface formed between the continuous aqueous phase and the droplets of the dispersed oily phase,

e) ripening, mineralization of the emulsion obtained in step d) is carried out, whereby the monolith forms and the material according to the invention is obtained.

11. The method according to claim 10, wherein, at the end of step c) and before step d), when the metal cation exchange inorganic solid material is a metal hexa- or octa-cyanometallate, for example of formula $[Alk^+_x]M^{n+}_y[M'(CN)_m]_t^{z-}$, wherein Alk is a monovalent cation selected from cations of alkali metals and the ammonium cation $NH_4^+$, x is 0, 1 or 2, M is a transition metal, n is 2 or 3, y is 1, 2 or 3, M' is a transition metal, m is 6 or 8, z is 3 or 4, and t is 1 or 2, such as a ferrocyanide of formula $[K^+_x]Cu^{z+}_y[Fe(CN)_6]^{z-}$, like $K_2Cu\,Fe(CN)_6$, the pH of the solution obtained in step c) is adjusted to the vicinity of 2, and a step c1) is additionally carried out during which an aqueous solution of at least a metal fluoride such as KF, LiF or sodium fluoride NaF is added to the solution obtained in step c).

12. A method for separating at least one metal cation from a liquid medium containing it, wherein said liquid medium is put into contact with the material according to any one of claims 1 to 9; preferably said liquid medium is an aqueous liquid medium, such as an aqueous solution.

13. The method according to claim 12, wherein said liquid medium is selected from liquids and effluents from the nuclear industry and the nuclear facilities and from activities using radionuclides.

14. The method according to any one of claims 12 to 13, wherein said cation is present at a concentration of 0.1 picogram to 100 mg/L, preferably from 0.1 picogram to 10 mg/L.

15. The method according to any one of claims 12 to 14, wherein the cation is a cation of an element selected from Cs, Co, Ag, Ru, Fe and TI and the isotopes, notably the radioactive isotopes of the latter; preferably, the cation is a $^{134}Cs$ cation or $^{137}Cs$ cation.

FIG.1

FIG.2

FIG.3

FIG.4

FIG.5

FIG.6

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 200147855 A1
- WO 2008031108 A2
- WO 2008129151 A2

- RU 2008125922 A
- EP 2546841 A1
- WO 2012049412 A2